# EUROPEAN PATENT SPECIFICATION

(11) **EP 1 830 682 B1**
(45) Date of publication and mention of the grant of the patent: **21.05.2008**
(21) Application number: 05822600.2
(22) Date of filing: 22.12.2005
(51) Int. Cl.: A47J 31/40

(54) **DEVICE FOR THE AUTOMATIC EJECTION OF A CAPSULE OR PELLET IN A MACHINE FOR THE PRODUCTION OF HOT BEVERAGES OR COFFEE**
VORRICHTUNG FÜR DEN AUTOMATISCHEN AUSWURF EINER KAPSEL ODER EINES PELLETS IN EINER MASCHINE FÜR DIE ZUBEREITUNG VON HEISSEN GETRÄNKEN ODER KAFFEE
DISPOSITIF D'EJECTION AUTOMATIQUE DE CAPSULES OU DE GRANULES POUR MACHINES A BOISSONS CHAUDES OU A CAFE

(30) Priority: 29.12.2004 IT MI20042545
(43) Date of publication of application: 12.09.2007
(73) Proprietor: Biepi S.R.L., 24040 Castel Rozzone BG (IT)
(72) Inventor: ZELIOLI, Giuseppe, I-26866 Castiraga Vidardo (Lodi) (IT); PREZZAMA', Nicola, I-24040 Castel Rozzone (Bergamo) (IT)
(74) Representative: De Gregori, Antonella
(86) International application number: PCT/EP2005/014174
(87) International publication number: WO 2006/069801

(56) References cited:
- EP-A- 1 477 092
- WO-A-03/039309
- US-A- 5 406 882

## Description

The present invention refers to a device for the automatic ejection of a capsule or pellet in a machine for the production of hot beverages or coffee.

In the field of the machines for the production of hot beverages or coffee through the use of capsules or pellets, at the end of the operation through which the pellet is subjected to infusion, such pellet or capsules must be removed. Document EP-A-1477092 discloses a device according to the preamble of independent claim 1.

This removal operation is not always simple and immediate, and in any case requires a specific intervention by the operator.

In this manner, the operator must take care that the hot, wet pellet or capsule, just used in the machine, is with certainty removed from its seat. One such operation, if directly realised with the manual withdrawal of such pellet or capsule, involves the possibility that the operator may burn himself with the same. Furthermore, it is not particularly hygienic that the operator uses his fingers which, even if only inadvertently, may generate a supply of bacteria and other impurities, generated for example from the handling of coins or banknotes or other foreign bodies.

Consequently, the technical problem of realising an automatic removal of such pellet o capsule without any intervention of the operator is particularly requested, once the use step of the same pellet or capsule has been completed.

General object of the present invention is therefore to identify an effective solution to the above-mentioned technical problem.

Another object is to realise a device for the automatic ejection of a capsule or pellet in a machine for the production of hot beverages or coffee adapted to carry out the above-mentioned task which is particularly easy to make operate, on any typology of existing machine, without particular and complicated modifications.

Still another object is that of realising a device for the automatic ejection of a capsule or pellet which, being automatic, avoids any hygiene problem, facilitating moreover the task of the operator of the machine for the production of hot beverages or coffee.

Still another object is that of realising a device for the automatic ejection of a capsule or pellet which may lack a specific actuator and may use the controls already foreseen in the machine for the production of hot beverages or coffee.

These objects according to the present invention are achieved by realising a device for the automatic ejection of a capsule or pellet in a machine for the production of hot beverages or coffee as set out in the attached claim 1.

In particular, a device for the automatic ejection of a capsule or pellet according to the present invention results particularly simple and free of specific drawbacks, speeding up and simplifying the use of any type of machine for the production of hot drinks or coffee.

Further salient and particular characteristics of the present invention are object of the dependent claims.

The characteristics and advantages of a device for the automatic ejection of a capsule or pellet in a machine for the production of hot beverages or coffee according to the present invention shall become clearer from the following description, provided as exemplifying and not limiting, of an embodiment with reference to the attached figures in which:
- figure 1 is a side elevation view of a generic machine for the production of hot beverages or coffee in an open position to receive a capsule, to which a device is applied for the automatic ejection of a capsule or pellet according to the present invention;
- figure 2 is a similar view to that of figure 1, with capsule positioned, partially sectioned in order to better illustrate the device elements;
- figures 2a and 2b respectively show a side elevation view of only a sliding bush in the position of figure 2 and a top view of such bush, with several elements of the machine partly in section.
- figure 3 is a view similar to that of figure 1, with the machine closed and partially sectioned, which shows with dashed-dotted lines a further position of a flexible hooking element;
- figure 4 is a view similar to that of figure 3 in which, the beverage having been made, there begins the first lifting step of the head of the machine by activating the device of the invention;
- figures 5 and 5a show a elevation view of the step following that of figure 4 and a side elevation view of only the sliding bush in the position of figure 5;
- figures 6, 6a and 6b show an elevation view of the step following that of figure 5 in which the ejection of the capsule occurs, a side elevation view only of the sliding bush in the position of figure 6 and a top view of such bush, partly in section, with several ejection elements of the capsule in action;
- figure 7 shows once again the starting position of figures 1 and 2.

With generic reference to the various figures, a device for the automatic ejection of a capsule or pellet in a machine for the production of hot drinks or coffee is shown in entirely schematic manner according to the invention.

A generic machine for the production of hot drinks or coffee is indicated in its entirety with 11 and comprises a movable part or head 13, movable on columns 12 and moved by means of an actuator 14, and a fixed part 15 which realises with the movable part 13 an infusion chamber in which a capsule or pellet 16 is placed which contains the product for realising a beverage, a coffee or similar product.

The movable part 13 has on its transverse bar 17, extended laterally outward, a flexible hooking element 18 with a curved free end 19, for example made in the form of a reinforced elastic plate.

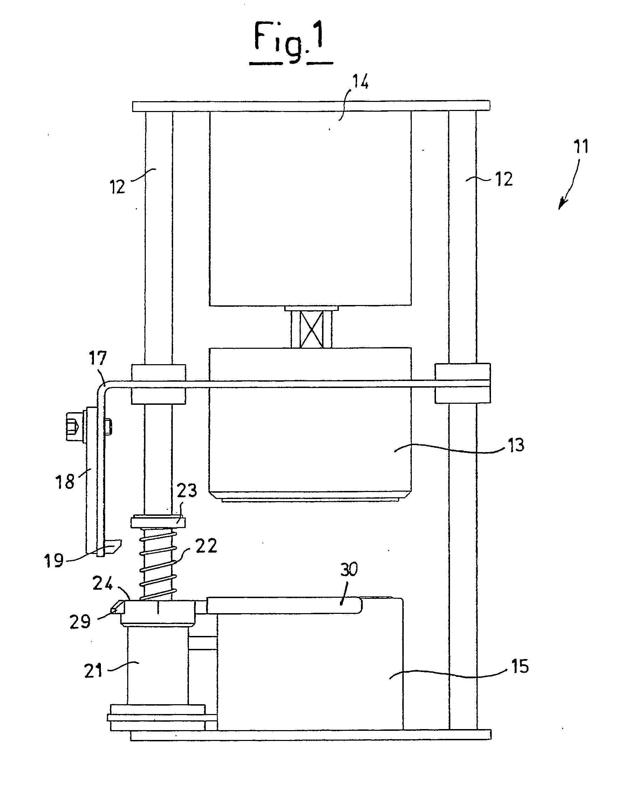

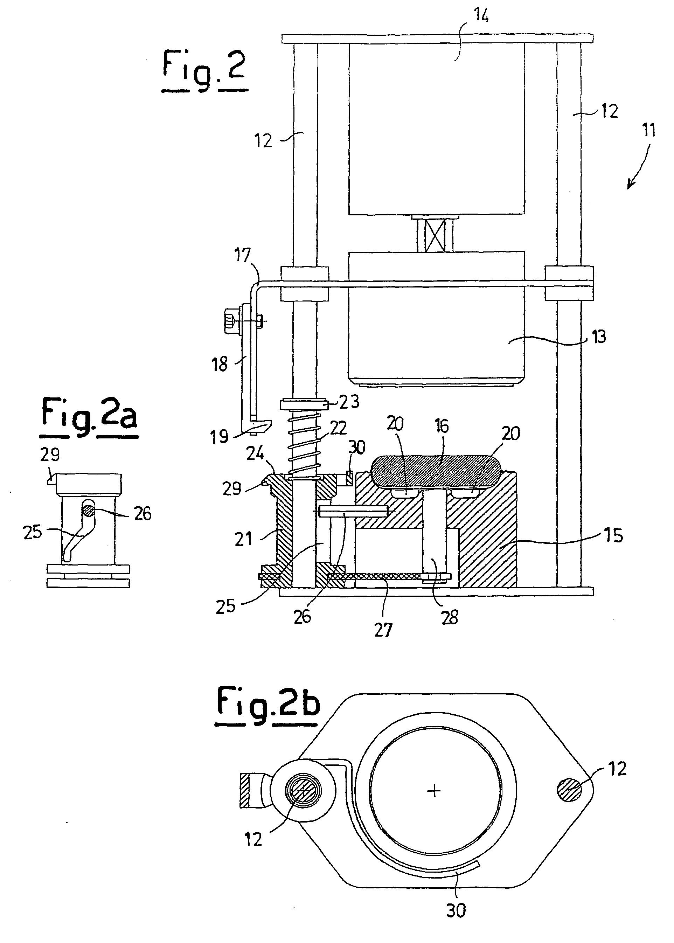

The fixed part 15 foresees a seat 20 for the partial housing of the capsule or pellet 16 and is arranged constrained to the base of the machine. To the side of such fixed part 15, for example arranged on one of the columns 12, a sliding bush 21 is foreseen on the column 12. In general, such sliding bush 21 is maintained in lowered position, as shown in figures 1 and 2, though a contrast spring 22 interacting between a counter flanging 23, made fixed on the column 12, and the upper surface 24 of the bush 21.

Laterally, the bush 21 foresees a shaped slot 25 on its outer side surface in which a freely sliding guide pin 26 is positioned which extends from the fixed part 15 or is integrated in it. Furthermore, it should be noted that integral with the bush 21, in the example at its base, a plate of connection 27 is foreseen to an extractor element 28, which extends upward until it is within the seat 20 for the partial housing of the capsule or pellet 16.

It should also be noted that the device according to the invention comprises, at an upper end of the bush 21, a rigid hooking tooth 29, which extends radially outward for a limited section of circumference. In this manner, the rigid hooking tooth 29 interacts with the curved free end 19 of the flexible hooking element 18, but may be disengaged from it by means of a slight rotation of one with respect to the other.

Furthermore, from the upper end of the bush 21, a shaped ejection plate 30 extends transversally to the movement between said fixed part 15 and said movable part 13, and which is arranged, in rest position, partially around the seat 20 of the capsule or pellet 16.

Therefore, according to the present invention, the device foresees a sliding element, in the example the bush 21, which is movable by means of axial and rotation movement between a rest position and a raised position. In the raised position, the rotating ejection plate 30 removes a capsule 16 arranged in the seat 20, in which the axial and rotation movement is determined by elements of mutual engagement, in the example the flexible hooking element 18 with the curved free end 19 on one side, arranged on the movable part 13, and the rigid hooking tooth 29 on the other side, arranged on the sliding element 21, which may be disengaged in the raised and rotated position.

The actuator 14 may naturally be of any type such as electromechanical, hydraulic, pneumatic, even manual or other type and consequently the device may have a manual, semi-automatic or automatic operation.

The operation of a device for the automatic ejection of a capsule or pellet in a machine for the production of hot beverages or coffee according to the invention is of extreme simplicity.

Indeed, beginning from the position of the figures 1 and 2, 2a, 2b, it is noted that the capsule or pellet 16 is placed in the seat 20 and the various parts of the device are inactive, until the closing of the movable 13 and fixed 15 parts of the machine for the production of hot beverages or coffee.

Then, once the two fixed 15 and movable 13 parts are closed with respect to each other, and after the infusion has taken place, the unloading of the consumed capsule 16 must be provided in order to substitute it with a new capsule.

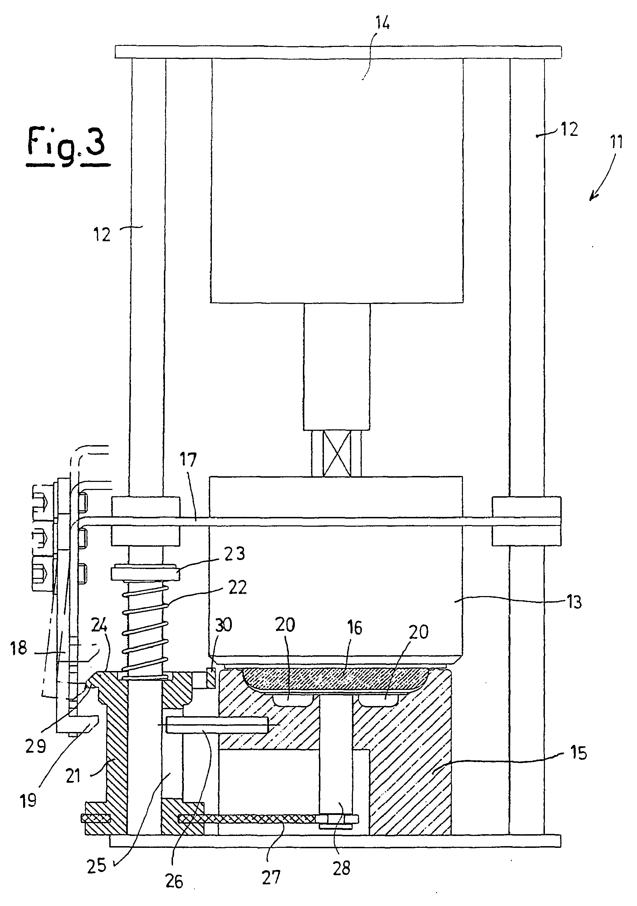

It may only be noted that in a certain sense the "activation" of the device of the invention occurs in the closing step, since the curved free end 19 of the flexible hooking element 18 descends downward, beyond the rigid hooking tooth 29 and is arranged at the central part of the bush 21 (figure 3), ready to hook and lift it, if possible in an ascending step.

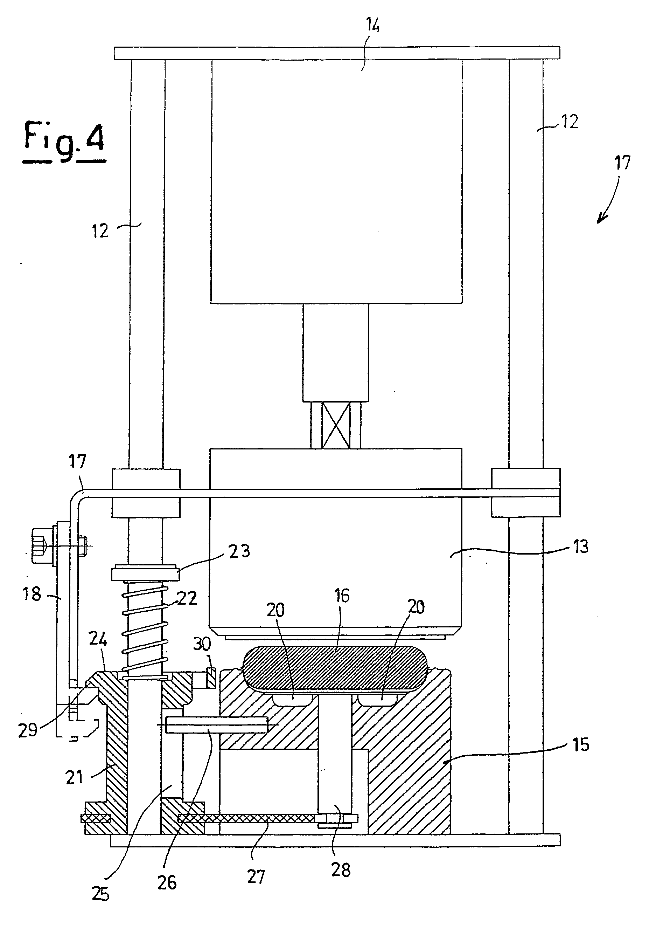

Figure 4 shows a first ascending step of the movable part 13 which, driven by the actuator 14, frees the upper part of the capsule 16. Simultaneously, the curved free end 19 of the flexible hooking element 18, integrally fixed to the transverse bar 17 of the movable part 13, hooks the rigid hooking tooth 29 of the bush 21.

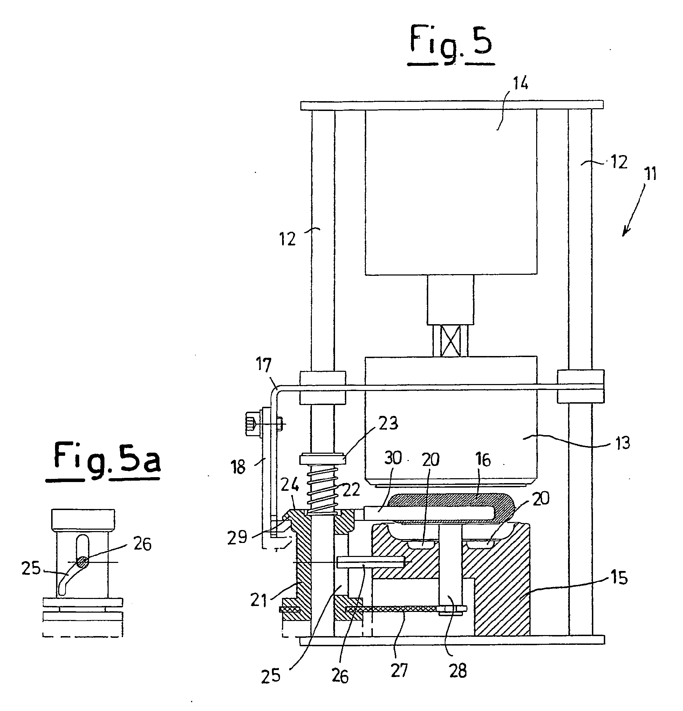

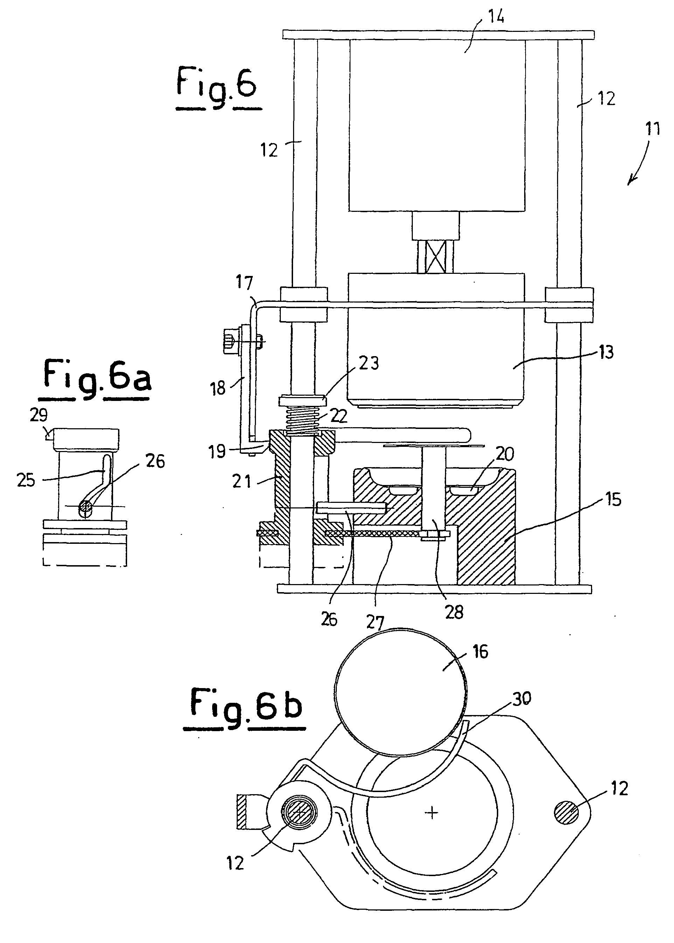

This first ascending step completed, in a second step the lifting of the movable part 13 continues, which involves the lifting of the bush 21. Indeed, the engagement of the curved end 19 of the flexible hooking element 18 on the rigid hooking tooth 29 of the bush 21 induces the sliding of the same bush 21 on the column 12. In this second step, the guide pin 26 slides in a first straight zone of the shaped slot 25, which involves no position variation between these parts. Simultaneously (figure 5), the bush 21, by means of the connection plate 27 connected to it, controls the lifting of the extractor element 28. This extractor element 28 lifts the capsule or pellet 16 placed within the seat 20, arranging it within the shaped plate 30. Figures 6, 6a and 6b show the interactions which occur in a third ascending step of the movable part 13.

Indeed, with the continued lifting of the bush 21, it is noted that the guide pin 26 slides into a second zone of the shaped slot 25 (curved and sloped with respect to the straight part). In such a manner, this engagement also determines a rotation of the bush 21, at the same time as its lifting. This rotation drives the shaped plate 30, which clears away the capsule 16 from above the extractor element 28, automatically unloading it outside the machine 11. In addition, the rigid hooking tooth 29, which extends radially outward for a limited section of circumference of the bush, while rotating tends to disengage itself from the curved end 19 of the flexible hooking element 18 (figure 6).

Therefore, at the end of the bush 21 rotation determined by the shaped slot 25, the tooth 29 is disengaged from the curved end 19 and the presence of the contrast spring 22 pushes the bush 21 downward, bringing it back to its initial position.

The pin 26 makes the bush 21 rotate at its initial position so that the plate 30 is brought back among the movable 13 and fixed 15 parts around the seat 20. The extractor 28 returns in the seat 20.

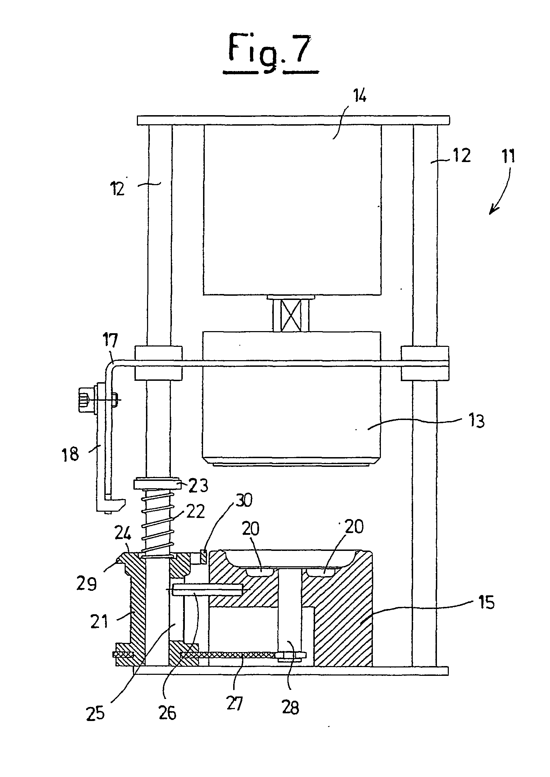

The movable part 13 completes its ascension and the fixed part 15 is ready to receive a new capsule or pellet 16 in its seat (figure 7).

It should be underlined that foreseeing the hooking element 18 arranged on the movable part 13 of flexible type also permits providing safety functions to the device. Indeed, such prevision, in the case of a possible exceeding of a pre-selected traction load, permits the automatic release between the moving parts, determined by the actuator 14.

Furthermore, the presence of the contrast spring 22, which is loaded during the ejection step of the capsule or pellet 16, is a guarantee of the restoration of the initial position of the device in the machine, independent of how the movements among the parts are carried out.

In such a manner, the device for the automatic ejection of a capsule or pellet in a machine for the production of hot beverages or coffee according to the present invention realises the previously highlighted objects.

The device for the automatic ejection of a capsule or pellet in a machine for the production of hot beverages or coffee results particularly simple in structure and does not require complicated arrangements of parts.

Furthermore, it is very clear from the description and from the drawings and by the new and inventive proposed solution that this solution is applicable to any type of machine for the production of hot beverages or coffee.

The device for the automatic ejection of a capsule or pellet in a machine for the production of hot beverages or coffee of the present invention thus conceived is susceptible to numerous modifications and variants, all part of the same invention.

Furthermore, the materials utilised, as well as their size and components, may be of any type according to the technical needs.

## Claims

1. Device for the automatic ejection of a capsule or pellet in a machine for the production of hot beverages or coffee, where said machine comprises a movable part (13), moved by means of an actuator (14), and a fixed part (15), which realise an infusion chamber (20) between them where a beverage or coffee capsule or pellet (16) is placed, a movable extractor element (28) being foreseen within said infusion chamber, the device being **characterised in that** associated with said extractor element (28) is a sliding element (21), provided at an upper end with an ejection plate (30) shaped to be arranged, in rest position, partially around said seat (20) of the capsule or pellet (16), transversally to the movement between said fixed part (15) and said movable part (13), the sliding element (21) being movable through axial and rotation movement between a rest position and a raised position in which said rotating plate (30) removes a capsule arranged in said seat (20), said axial and rotation movement being determined by mutual engagement elements (18, 19; 29), one arranged on said movable part (13) and the other on said sliding element (21), which may be disengaged in the raised and rotated position.

2. Device according to claim 1, **characterised in that** said sliding element (21) is a bush, arranged sliding on a column (12) of the frame of said machine.

3. Device according to claim 1, **characterised in that** said sliding element (21) extends into a connection plate (27) which constrains the sliding extractor element (28) within said fixed part (15).

4. Device according to claim 1, **characterised in that** said sliding element (21) is a bush which foresees a shaped slot (25) on one of its outer side surfaces, in which a freely sliding guide pin (26) is positioned, integral with said fixed part (15), said shaped slot (25) determining said axial and rotation movement.

5. Device according to claim 1, **characterised in that** said sliding element (21) is maintained in said rest position by a contrast spring (22).

6. Device according to claim 1, **characterised in that** said elements of mutual engagement comprise a hooking element (18) with curved free end (19) on one side, arranged on the movable part (13), and a rigid hooking tooth (29) on the other side, arranged on said sliding element (21).

7. Device according to claim 6, **characterised in that** said rigid hooking tooth (29) extends radially outward for a limited section of circumference of said sliding element (21).

8. Device according to claim 6, **characterised in that** said hooking element (18) arranged on said movable part (13) is of flexible type.

9. Device according to claim 1, **characterised in that** said actuator (14) is of any type, such as electromechanical, hydraulic, pneumatic, manual or other.

## Patentansprüche

1. Vorrichtung für den automatischen Auswurf einer Kapsel oder eines Pellets in einer Maschine für die Zubereitung von heißen Getränken oder Kaffee, wobei die Maschine ein bewegliches Teil (13), das mittels eines Aktuators (14) bewegt wird, und ein ortsfestes Teil (15) umfasst, die miteinander eine Infusionskammer (20) schaffen, wo eine Getränk- oder Kaffeekapsel oder ein Getränk- oder Kaffeepellet (16) platziert wird, wobei ein bewegliches Extraktionselement (28) innerhalb der Infusionskammer vorgesehen ist, wobei die Vorrichtung **dadurch gekennzeichnet ist, dass** zu dem Extraktionselement (28) ein Gleitelement (21) gehört, das an einem oberen Ende mit einer Auswurfplatte (30) versehen ist, die so geformt ist, dass sie, in ruhender Lage, teilweise um den Sitz (20) der Kapsel oder des Pellets (16) liegt, transversal zur Bewegung zwischen dem ortsfesten Teil (15) und dem beweglichen Teil (13), wobei das Gleitelement (21) durch Axial- und Rotationsbewegung zwischen einer Ruhelage und einer angehobenen Lage bewegbar ist, in der die rotierende Platte (30) eine im Sitz (20) angeordnete Kapsel entfernt, wobei die Axial- und Rotationsbewegung durch gegenseitige Eingriffselemente (18, 19; 29) bestimmt ist, von denen das eine auf dem beweglichen Teil (13) und das andere auf dem Gleitelement (21) angeordnet ist, das in der angehobenen und gedrehten Position gelöst werden kann.

2. Vorrichtung nach Anspruch 1, **dadurch gekennzeichnet, dass** das Gleitelement (21) eine Buchse ist, die gleitend auf einer Säule (12) des Rahmens der Maschine angeordnet ist.

3. Vorrichtung nach Anspruch 1, **dadurch gekennzeichnet, dass** sich das Gleitelement (21) in eine Verbindungsplatte (27) erstreckt, die das Gleitextraktionselement (28) innerhalb des ortsfesten Teils (15) einschränkt.

4. Vorrichtung nach Anspruch 1, **dadurch gekennzeichnet, dass** das Gleitelement (21) eine Buchse ist, in der ein geformter Schlitz (25) auf einer ihrer Außenseitenflächen vorgesehen ist, in dem ein ungehindert gleitender Führungsstift (26) positioniert ist, und zwar integral mit dem ortsfesten Teil (15), wobei der geformte Schlitz (25) die Axial- und Rotationsbewegung bestimmt.

5. Vorrichtung nach Anspruch 1, **dadurch gekennzeichnet, dass** das Gleitelement (21) durch eine Kontrastfeder (22) in der Ruhelage gehalten wird.

6. Vorrichtung nach Anspruch 1, **dadurch gekennzeichnet, dass** die Elemente gegenseitigen Eingriffs ein Hakenelement (18) mit einem gekrümmten freien Ende (19) auf einer Seite, angeordnet auf dem beweglichen Teil (13), und einen starren Hakenzahn (29) auf der anderen Seite, angeordnet auf dem Gleitelement (21), umfassen.

7. Vorrichtung nach Anspruch 6, **dadurch gekennzeichnet, dass** sich der starre Hakenzahn (29) radial auswärts für einen begrenzten Abschnitt des Umfangs des Gleitelements (21) erstreckt.

8. Vorrichtung nach Anspruch 6, **dadurch gekennzeichnet, dass** das auf dem beweglichen Teil (13) angeordnete Hakenelement (18) flexibler Art ist.

9. Vorrichtung nach Anspruch 1, **dadurch gekennzeichnet, dass** der Aktuator (14) beliebigen Typs ist, z.B. elektromechanisch, hydraulisch, pneumatisch, manuell, u.a..

## Revendications

1. Dispositif d'éjection automatique de capsules ou de granules dans une machine servant à la production de boissons chaudes ou de café, dans lequel ladite machine comporte une partie mobile (13), se déplaçant au moyen d'un actionneur (14), et une partie fixe (15), lesquelles constituent entre elles une chambre d'infusion (20) dans laquelle des capsules ou des granules du breuvage ou de café (16) sont placées, un élément d'extraction mobile (28) étant prévu à l'intérieur de ladite chambre d'infusion, le dispositif étant **caractérisé en ce que**, associé audit élément d'extraction (28), se trouve un élément de coulissement (21) prévu, au niveau de son extrémité supérieure avec une plaque d'éjection (30) configurée pour être disposée, en position de repos, partiellement autour de ladite embase de la capsule ou des granules (16), transversalement au déplacement entre ladite partie fixe (15) et ladite partie mobile (13), l'élément de coulissement (21) étant mobile par un mouvement axial et de rotation entre une position de repos et une position relevée dans laquelle ladite plaque de rotation (30) retire une capsule disposée dans ladite embase (20), ledit mouvement axial et de rotation étant déterminé par des éléments d'engagement mutuel (18, 19 ; 29), l'un étant disposé sur ladite partie mobile (13) et l'autre sur ledit élément de coulissement (21), lesquels peuvent être désengagés dans la position relevée et tournée.

2. Dispositif selon la revendication 1, **caractérisé en ce que** ledit élément de coulissement (21) est un manchon, disposé pour coulisser sur une colonne (12) du bâti de ladite machine.

3. Dispositif selon la revendication 1, **caractérisé en ce que** ledit élément de coulissement (21) s'étend dans une plaque de raccordement (27) qui contraint l'élément d'extraction coulissant (28) à l'intérieur de ladite partie fixe (15).

4. Dispositif selon la revendication 1, **caractérisé en ce que** ledit élément de coulissement (21) est un manchon qui prévoit une fente profilée (25) sur l'une de ses surfaces latérales extérieures, dans laquelle une broche de guidage coulissant librement (26) est positionnée, solidaire de ladite partie fixe (15), ladite fente profilée (25) déterminant ledit mouvement axial et de rotation.

5. Dispositif selon la revendication 1, **caractérisé en ce que** ledit élément de coulissement (21) est maintenu dans ladite position de repos par un ressort de contraction (22).

6. Dispositif selon la revendication 1, **caractérisé en ce que** lesdits éléments d'engagement mutuel comportent un élément d'accrochage (18) avec une extrémité libre recourbée (19) sur un côté, disposé sur la partie mobile (13), et une dent d'accrochage rigide (29) sur l'autre côté, disposée sur ledit élément de coulissement (21).

7. Dispositif selon la revendication 6, **caractérisé en ce que** ladite dent d'accrochage rigide (29) s'étend radialement vers l'extérieur sur une section limitée de la circonférence dudit élément de coulissement (21).

8. Dispositif selon la revendication 6, **caractérisé en ce que** ledit élément d'accrochage (18) disposé sur ladite partie mobile (13) est d'un type flexible.

9. Dispositif selon la revendication 1, **caractérisé en ce que** ledit actionneur (14) est d'un type quelconque, tel que électromécanique, hydraulique, pneumatique, manuel ou autre.
